# EUROPÄISCHE PATENTSCHRIFT

(11) **EP 1 138 184 B1**
(45) Veröffentlichungstag und Bekanntmachung des Hinweises auf die Patenterteilung: **01.02.2006**
(21) Anmeldenummer: 01106111.6
(22) Anmeldetag: 13.03.2001
(51) Int. Cl.: A01B 15/02

(54) **Bodenbearbeitungsmaschine**
Soil working machine
Machine pour le travail du sol

(30) Priorität: 18.03.2000 DE 10013621
(43) Veröffentlichungstag der Anmeldung: 04.10.2001
(60) Teilanmeldung: 05019143.6
(73) Patentinhaber: Amazonen-Werke H. Dreyer GmbH & Co. KG, 49205 Hasbergen (DE)
(72) Erfinder: Gattermann, Bernd, Dipl.-Ing., 27798 Hude (DE); Sosnicki, Jürgen, Dipl.-Ing., 04205 Leipzig (DE); Pokriefke, Michael, Dipl.-Ing., 04229 Leipzig (DE); Tiessen, Reimer Uwe, Dipl.-Ing., 26135 Oldenburg (DE); Reinke, Wilfried, 26123 Oldenburg (DE)

(56) Entgegenhaltungen:
- WO-A-00/72653
- WO-A-01/24603
- DE-A- 3 628 910
- US-A- 2 396 132
- US-A- 4 638 868
- US-A- 4 932 478

## Beschreibung

Die Erfindung betrifft ein Bodenbearbeitungswerkzeug gemäß der Oberbegriffes des Patentanspruches .

Ein derartiges Bodenbearbeitungswerkzeug ist beispielsweise durch das US-PS 46 38 868 bekannt. Dieses Bodenbearbeitungswerkzeug ist mittels eines an einem Scharhalm angeschraubten Adapters über Reibschluß an der Schafthalterung befestigt.

Durch die DE-PS 36 28 910 ist ein Bodenbearbeitungswerkzeug bekannt, bei dem sich an das obere Ende des Zinkens ein Leitblech anschließt. Dieses Leitblech ist hier genauso wie der Zinken mittels Schraubverbindung am Scharhalm angeordnet. Aufgrund der Schraubverbindung ist das Auswechseln des Zinkens sowie des Leitbleches mühsam und zeitaufwendig.

Der Erfindung liegt die Aufgabe zugrunde, dieses bekannte Schar mit der Reibschlußverbindung dahingehend weiterzubilden, dass eine einfache Ausbildung der Reibschlussverbindung für die Zinken erreicht wird.

Diese Aufgabe wird erfindungsgemäß durch die kennzeichnenden Merkmale des Anspruches gelöst. Infolge dieser Maßnahmen wird der Zinken mittels Reibschlußverbindung an dem Leitblich angeordnet, welches den Adapter zur Aufnahme des Zinkens aufweist.

Weitere Einzelheiten der Erfindung sind der Beispielsbeschreibung und den Zeichnungen zu entnehmen. Hierbei zeigen
- Fig.1: ein Bodenbearbeitungswerkzeug, nicht gemäß der Erfindung, in Seitenansicht,
- Fig.2: das Bodenbearbeitungswerkzeug gemäß Fig.1 in Seitenansicht, jedoch in Explosionsdarstellung,
- Fig.3: den Adapter gemäß Fig. 1 und 2 in Vorderansicht,
- Fig.4: das Leitblech des Bodenbearbeitungswerkzeuges gemäß Fig.1 und 2 in der Vorderansicht,
- Fig.5: der Zinken des Bodenbearbeitungswerkzeuges gemäß Fig.1 und 2 in der Vorderansicht,
- Fig.6: ein Leitblech mit Adapter eines Bodenbearbeitungswerkzeuges in der Vorderansicht, gemäß der Enfindung,
- Fig.7: das Leitblech mit Adapter gemäß Fig.6 in der Seitenansicht,
- Fig.8: der Zinken des Bodenbearbeitungswerkzeuges,
- Fig.9: der Zinken des Bodenbearbeitungswerkzeuges in Seitenansicht,
- Fig. 10: ein weiteres Leitblech in Vorderansicht eines Bodenbearbeitungswerkzeuges nicht gemäβ der Erfindung,
- Fig. 11: das Leitblech gemäß Fig. 10 in Seitenansicht,
- Fig. 12: der Adapter mit seitlich abstehenden Flügelscharen in der Vorderansicht, nicht gemäß der Erfindung,
- Fig. 13: den Adapter ohne Flügelschare in der Seitenansicht, nicht gemäß der Erfindung,
- Fig.14: ein Zinken entsprechend des Zinkens gemäß Fig. 8,
- Fig.15: der Zinken gemäß Fig. 14 in Seitenansicht,
- Fig.16: ein erfindungsgemäßes mit Adapter in der Vorderansicht,
- Fig.17: das Leitblech mit Adapter gemäß Fig.16 in Seitenansicht,
- Fig.18: das Flügelschar in der Vorderansicht,
- Fig.19: das Flügelschar gemäß Fig. 18 in Seitenansicht,
- Fig.20: der Zinken entsprechend Fig.8 und 14 und
- Fig.21: der Zinken gemäß Fig.20 in Seitenansicht.

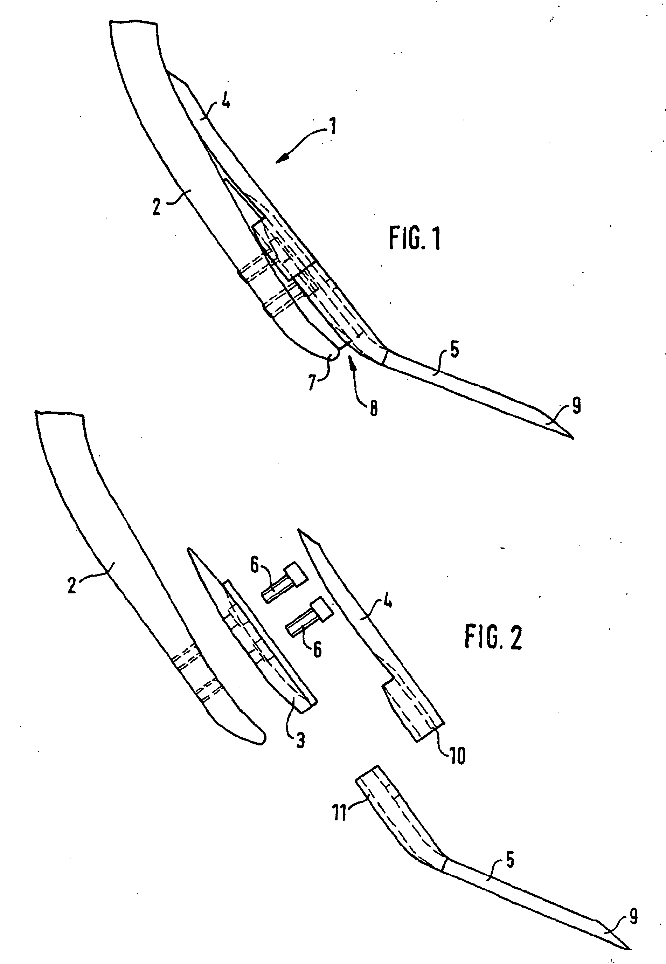

Das Bodenbearbeitungswerkzeug 1 gemäß Fig.1 und 2 ist für die Anordnung an Bodenbearbeitungsgeräten, beispielsweise Grubbern, vorgesehen. Das Bodenbearbeitungswerkzeug 1 weist den Halm 2, den Adapter 3, das Leitblech 4 und den Zinken 5 auf. An dem Halm 2 ist mittels der beiden Schrauben 6 der Adapter 3 befestigt. Dieser Adapter 3 bildet zusammen mit dem unteren Ende 7 des Halmes 2 eine Schafthalterung 8. Der Adapter 3 weist ein schwalbenschwanzähnliches Profil auf, welches sich nach oben vergrößert bzw. die sich nach unten in Richtung der Zinkenspitze 9 des Zinkens 5 verjüngt. Auf dem Adapter 3 ist zunächst das Leitblech 4 aufzuschieben und wird mittels der Befestigungselemente 10 und der sich nach unten verjüngenden Ausbildung der Schafthalterung 8 durch Reibschluß auf dem Adapter 3 gehalten. Anschließend wird der Zinken 5 mit seinen Halterungselementen 11 auf den Adapter 3 aufgeschoben und ebenfalls durch Reibschluß der Schafthalterung 8 gehalten. Somit sind sowohl das Leitblech 4 wie auch der Zinken 5 mittels einer formschlüssigen Reibschlußverbindung auf dem Adapter 3 befestigt. Das Auswechseln der verschlissenen Zinken 5 bzw. des Leitbleches 4 geschieht in umgekehrter Reihenfolge, in dem mittels eines Hammerschlages der Zinken 5 von oben von dem Adapter 3 abgeschlagen wird. Das Leitblech 4 wird ebenfalls ausgetauscht, wenn es verschlissen ist. Erfahrungen haben jedoch gezeigt, daß der Zinken 5 wesentlich häufiger als das Leitblech 4 aufgrund von Verschleiß ausgetauscht werden muß.

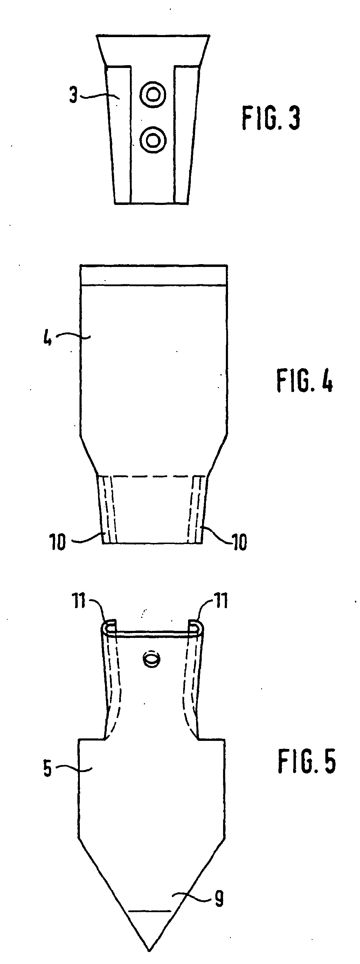

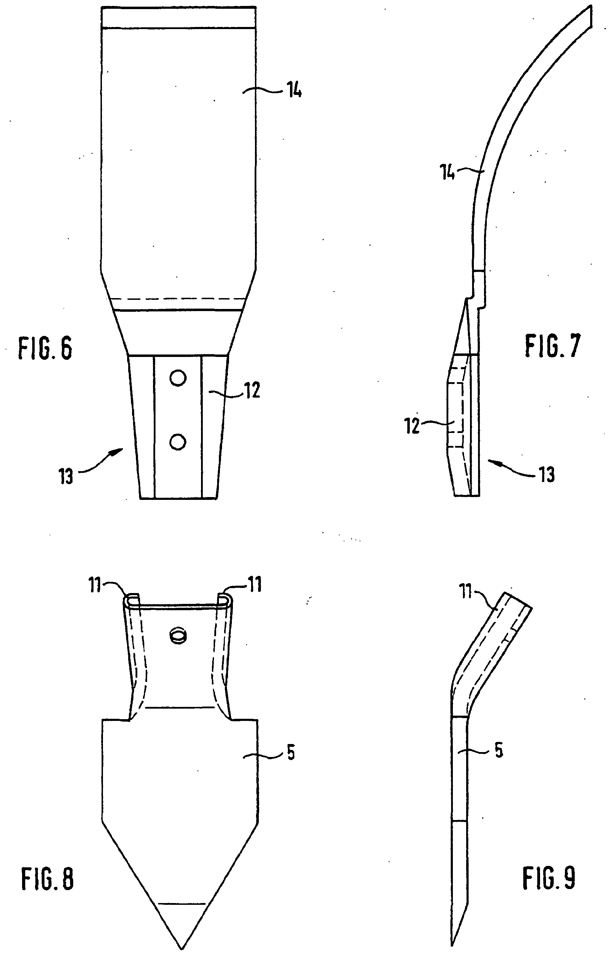

Das Bodenbearbeitungswerkzeug gemäß den Fig.6 bis 9 unterscheidet sich von dem Bodenbearbeitungswerkzeug gemäß Fig.1 bis 5 dadurch, daß der Adapter 12 der Schafthalterung 13 einstückig an dem Leitblech 14 angeordnet ist. Das Leitblech 14 wird mittels Schrauben, die durch die Bohrungen 16 gesteckt werden, an dem nicht dargestellten Scharhalm befestigt. Anschließend wird der Zinken 5 mit seinen Halterungselementen 11 auf den Adapter 12 aufgesteckt und hier durch Reibschluß gehalten.

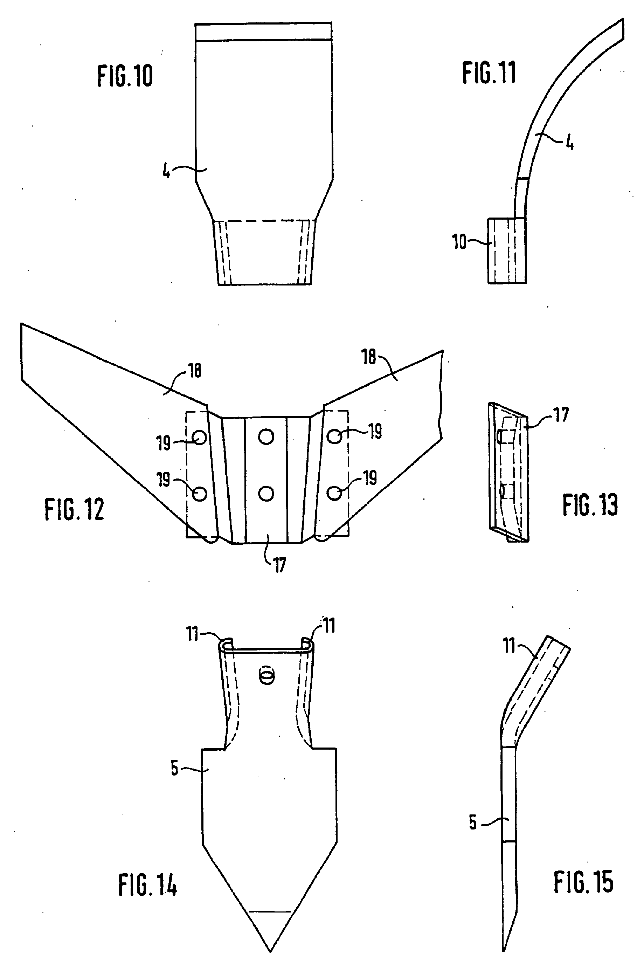

In den Fig. 10 bis 15 ist ein weiteres Bodenbearbeitungswerkzeug dargestellt. Dieses Bodenbearbeitungswerkzeug weist das Leitblech 4, den Adapter 17 mit den seitlich abstehenden Flügelscharen 18 sowie den Zinken 5 auf. Zunächst wird der Adapter 17 mittels Schrauben, die durch die Bohrungen 16 gesteckt werden, an einem nicht dargestellten Halm befestigt. Anschließend werden mittels der Schraubbolzen 19 die Flügelschare 18 an dem Adapter 17 angeschraubt. Anschließend wird zunächst das Leitblech 4 von unten auf den Adapter 17 aufgesteckt und aufgrund der sich nach oben vergrößemden bzw. nach unten verjüngenden Führung durch Reibschluß gehalten. Anschließend wird der Zinken 5 aufgesteckt.

Es ist auch möglich, die Flügelschare 18 einstückig mit dem Adapter 17 auszubilden.

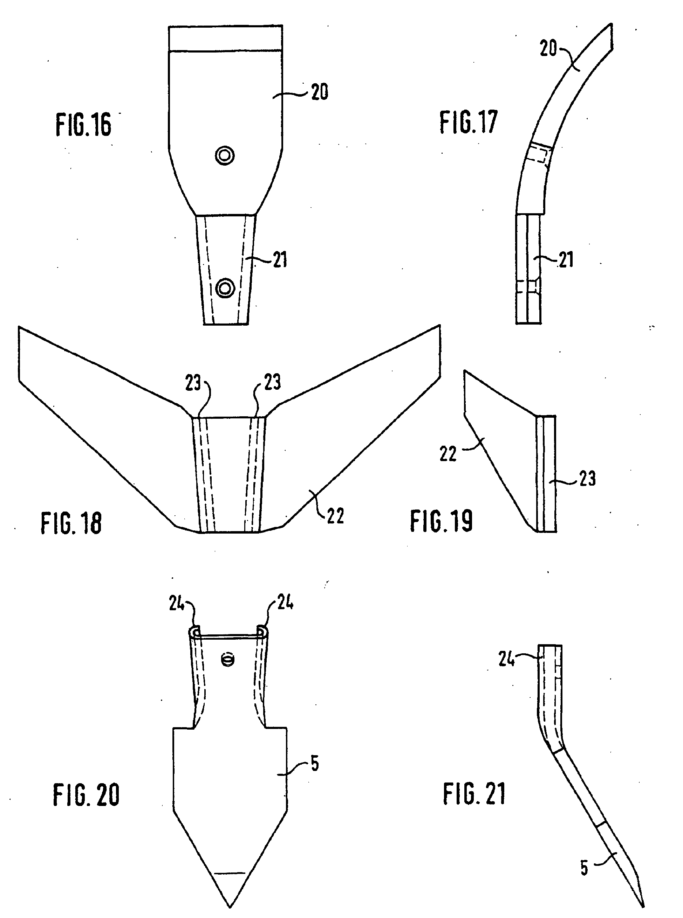

Ein weiteres Bodenbearbeitungswerkzeug zeigen die Fig.16 bis 21. Dieses Bodenbearbeitungswerkzeug besteht aus dem Leitblech 20 mit dem angeschmiedeten Adapterteil 21, dem zweiflügligen Flügelschar 22 gemäß Fig.18 und dem Zinken 5. Zunächst wird der Adapter 21 mit dem Leitblech 20 an einem nicht dargestellten Halm mittels Schraubbolzen befestigt. Anschließend wird das Flügelschar 22 mit den Befestigungsteilen 23 auf den Adapter 21, der an dem Leitblech 20 einstückig angeordnet ist, aufgeschoben. Anschließend wird der Zinken 5 auf der an dem Flügelschar 22 befindlichen Halterung 24, die sich nach unten verjüngt, aufgeschoben und durch Reibschluß gehalten.

## Patentansprüche

1. Bodenbearbeitungswerkzeug für Bodenbearbeitungsgeräte, mit einem Halm, an dessen unteren Ende ein Zinken mittels einer sich in Richtung des freien Ende des Zinken bzw. des Halmes verjüngenden Schafthalterung durch Reibschluss lösbar befestigt ist, **dadurch gekennzeichnet, dass** sich an das obere Ende des Zinkens (5) ein Leitblech (4) anschließt, dass die Schafthalterung (3, 8) einen Adapter (12, 21) aufweist, welcher an dem unteren Ende des Leitbleches (14, 20) einstückig angeordnet ist, dass das Leitblech (14,20) von dem Adapter (12,21) in Richtung seines freien oberen Endes nach vorn gekrümmt verläuft, und dass dieser Adapter (12, 21) einen Teil der Schafthalterung bildet, mittels welchen der Zinken (5) am Halm befestigt ist.

## Claims

1. Ground-cultivating tool for ground-cultivating devices, said tool having a blade, at the lower end of which a tine is detachably secured through friction by means of a shaft holder, which tapers in the direction of the free end of the tine or respectively of the blade, **characterised in that** a baffle (4) abuts against the upper end of the tine (5), **in that** the holder (3, 8) includes an adapter (12, 21), which is disposed in one piece at the lower end of the baffle (14, 20), **in that** the baffle (14, 20) extends from the adapter (12, 21) in a curved manner forwards in the direction of its free upper end, and **in that** this adapter (12, 21) forms a part of the shaft holder, by means of which the tine (5) is secured to the blade.

## Revendications

1. Outil pour le travail du sol pour une machine pour le travail du sol comprend une tige dont l'extrémité inférieure reçoit une dent par liaison par frottement, amovible dans un porte-outil se rétrécissant dans la direction de l'extrémité libre de la dent ou de la tige,
**caractérisé en ce que**
- la tôle guide (4) se fixe à l'extrémité supérieure de la dent (5), cette tôle guide présentant le porte-outil (3, 8) qui comporte un adaptateur (12, 21) qui est réalisé en une seule pièce avec l'extrémité inférieure de la tôle guide (14, 20),
- la tôle guide (14, 20) s'étendant de manière cintrée vers l'avant à partir de l'adaptateur (12, 21) en direction de son extrémité libre supérieure et
- cet adaptateur (12, 21) constitue une partie du porte-outil au moyen duquel la dent (5) est fixée à la tige.
